# EUROPEAN PATENT APPLICATION

(11) **EP 0 756 892 A2**
(43) Date of publication of application: **05.02.1997**
(21) Application number: 96830427.9
(22) Date of filing: 31.07.1996
(51) Int. Cl.: B01F 13/00, B29B 7/60

(54) **Apparatus for feeding the components of a two-component adhesive to be mixed at the moment of injection**

(30) Priority: 04.08.1995 IT FI950174
(71) Applicant: ATLA COOP. Soc. Coop. a r.l., I-50037 San Piero a Sieve (Firenze) (IT)
(72) Inventor: Parigi, Stefano, 50041 Calenzano (Firenze) (IT); Santini, Paolo, 50041 Calenzano (Firenze) (IT)
(74) Representative: Mannucci, Gianfranco, Dott.-Ing.

(57) **Abstract**

The apparatus comprises in combination: housings for comparatively large containers (7) in which the components of the adhesive are packaged to allow small quantities thereof to be dispensed; a positive-displacement pump (9C, 15) connected to each housing to feed the respective component to the injector, each pump being provided with a feed valve (11) and a delivery valve (13); and means for opening one of the two valves and closing the other, the opening and closing being synchronized with the phases of each cycle of the associated pump.

## Description

When assembling door or window frames made up of metal (especially aluminium) sections, the sections are mitred and joined together usually at right angles. The joining of two sections at a corner of the frame is effected by means of right-angled corner pieces whose arms are each inserted into the cavity of one of the sections, the two sections and the corner piece being fixed together by caulking the ends of the sections into recesses in the corner piece itself and/or by means of a subsequent injection of adhesive, usually a two-component adhesive.

In order to caulk and perforate the sections - e.g. at the joint corner and/or at one or more points against the arms of the corner piece - and subsequently to inject the adhesive through the holes, devices are used to automate these operations. With such devices it is important, for repetitive operation on large numbers of parts, that no adhesive should drip from the adhesive injecting device away from the injection site, a fact which would make it necessary continually to stop and clean the apparatus and neighbouring parts so that the adhesive does not set and block the equipment up. Furthermore, given the large amounts of adhesive that are used, the apparatus must be fed from containers of the components of the adhesive that are of comparatively large capacity and can be replaced quickly and easily, and must allow accurate dispensing of the adhesive.

The invention provides an apparatus for feeding the components of a so-called two-component adhesive (the components having to be mixed at the moment of injection by means of an injection nozzle) that comprises in combination: housings for comparatively large containers in which the components of the adhesive are packaged to allow small quantities thereof to be dispensed; a positive-displacement pump connected to each housing to feed the respective component to the injector, each pump being provided with a feed valve and a delivery valve; and means for opening one of the two valves and closing the other, the opening and closing being synchronized with the phases of each cycle of the associated pump.

The pumps are preferably of plunger type and the valves are rotary valves operated by a single actuator via a linkage.

The apparatus may comprise means for delaying the switching of the valves at the end of the last cycle in a series of injection cycles, in order to bring about a limited withdrawal of the adhesive into the injector and prevent the adhesive dripping between one injection and the next.

In one embodiment of the invention, each container housing has a compressed-air pusher that maintains pressure on the component to be fed to the corresponding pump.

In another embodiment, each container housing is situated at a higher level than its respective pump and feeds the pump by dispensing downwards under gravity.

The invention will be made clearer by the following description and accompanying drawing, which latter shows a practical, non-limiting embodiment of the invention. In the drawing:
Fig. 1 shows a side view of an apparatus for dispensing a two-component adhesive, in partial section on an axial plane through the component containers;
Fig. 2 shows a partial view on II-II of the apparatus of Fig. 1;
Fig. 3 shows a partial view of the apparatus in section on a plane marked III-III in Fig. 1 perpendicular to the axis of said containers; and
Fig. 4 shows an alternative embodiment.

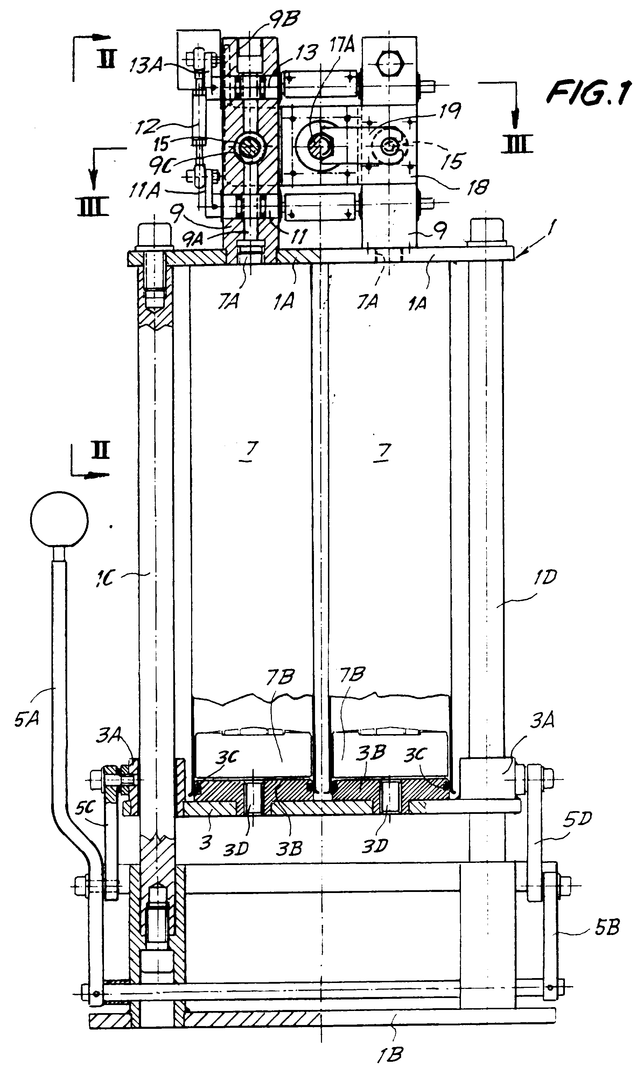

The apparatus comprises a frame 1 (Fig. 1) with two cross members 1A, 1B connected to each other by circular-section bars 1C, 1D acting as guides for the movement of a movable cross member 3 that travels up and down them on bushes 3A. This movable cross member 3 can be moved manually towards a cross member 1A of the frame using a toggle mechanism which comprises a pair of levers 5A, 5B, one of which includes a handle, and two connecting rods 5C, 5D. Mounted on the movable cross member are two discs 3B, on each of which can be fitted the base of a container 7 containing one component of the adhesive. A circumferential seal 3C between disc and base keeps the joint leaktight.

Said containers 7 have a movable base 7B and are fastened to the cross member 1A by screwing the threaded dispensing neck 7A of each container into a tapped hole in a corresponding body 9 mounted on said cross member 1A. The lever 5A is then turned to introduce a corresponding disc 3B into the base of each container 7: compressed air is fed through a hole 3D in this disc to apply pressure to the adhesive component by displacing the movable base 7B of the container.

Each body 9 has a through hole 9A leading from the dispensing mouth of the container 7 and terminating with a tapped opening 9B allowing it to be connected, via a flexible hose, to a single injection nozzle (not shown). In this way both components of the adhesive can be fed to the nozzle so that they are mixed during the injection itself.

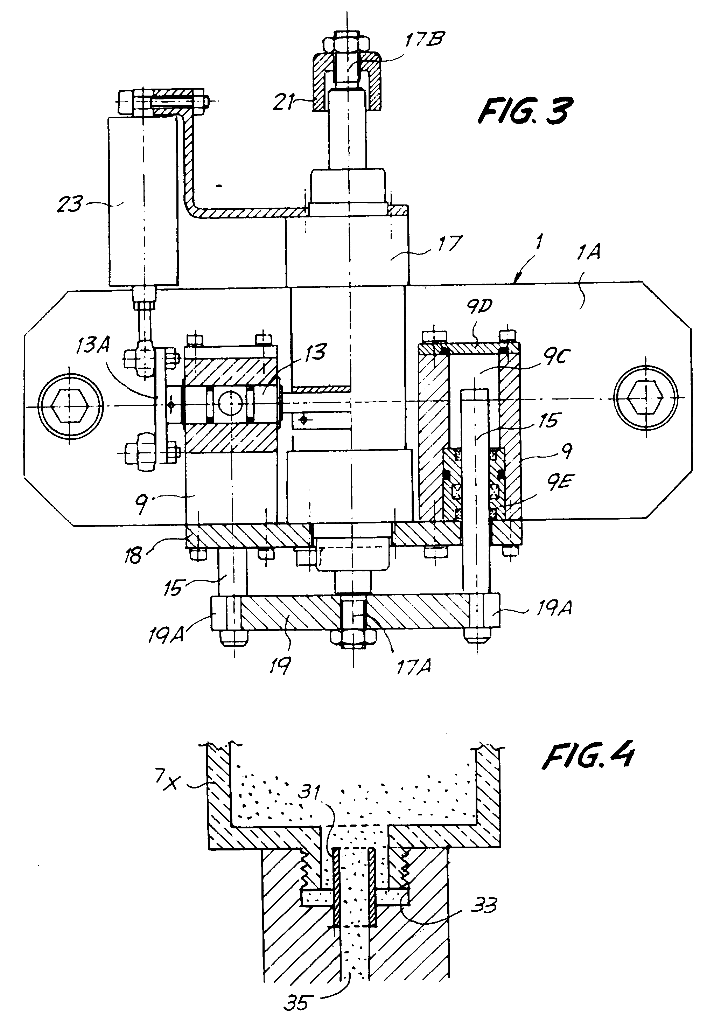

The body 9 contains a cylindrical cavity 9C whose axis is at right angles to said hole 9A, which hole can be intercepted upstream and downstream of said cavity by means of valves 11, 13 rotating in corresponding seats whose axes are at right angles to the axis of the hole 9A. This cavity 9C is closed off, with intermediate gaskets, on one side (Fig. 3) by a plate 9D and on the other by a bush 9E through which a plunger 15 slides leaktightly. In this way said cavity 9C and the plunger 15 form a positive-displacement pump integral with the body 9, the plate 9D and the bush 9E being bolted to the body 9.

The shutoff element of each valve 11, 13 ends in an axial projection to which an actuating lever 11A, 13A is attached for the rotation of the shutoff element. These levers are connected to each other by a tie rod 12 so as to operate simultaneously, the through passageways of the valve shutoff elements being set at 90° to each other.

An actuating jack 17 (Fig. 3) is mounted between the bodies 9 and fixed to a plate 18 integral with these bodies, and has a through rod threaded at both ends. Fixed to one end 17A of the rod is the middle part of a bar 19 having slotted ends 19A, each fitting into a corresponding neck at the free end of each of the rods of the plungers 15. The other end 17B of the jack 17 rod carries a tapped bush 21 that can be adjusted axially with respect to the rod by means of its thread and locked to it by means of a lock nut, in order to act as an end-of-stroke limiter against the jack itself.

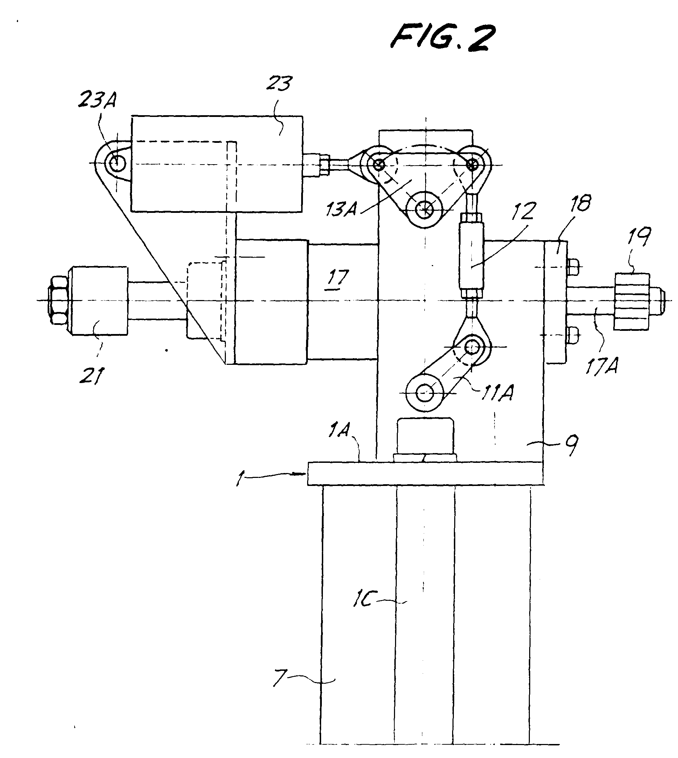

A second jack 23 (Fig. 2) is hinged to a pin 23A integral with the bodies 9 and can cause both of said valves 11, 13 to turn simultaneously through 90° by acting on said actuating levers 11A, 13A.

To operate the device, once the two containers 7 are inserted in their respective housings as described above, compressed air is fed in between the discs 3B and the bases 7B of the respective containers, the components of the adhesive contained therein being intercepted by the first respective valve 11. When the adhesive is to be dispensed, the jack 17 is operated to drive the plungers 15 simultaneously into their respective cavities 9C, and the jack 23 is operated in order to turn both pairs of valves 11, 13 through 90°, so closing valve 11 and opening valve 13. In this way a predetermined amount of the components contained in both cavities 9C is fed to the same injector in order to be mixed together and injected where required.

The positions of the valves 11, 13 are then reversed, by the release of the jack 23, and the plungers 15 are partly withdrawn from the cavities 9C in order to draw in from the containers 7 a new quantity of components which will be injected on the next actuation.

The quantity of component injected on each actuation of the jack 17 can be closely controlled by adjusting the stroke of the jack through the end-of-stroke bush 21.

Alternatively it is possible to read the stroke of the plunger with an encoder device, making use of a rack and pinion, or other equivalent means; in this way it is possible to program the quantities injected by means of a computer.

At the end of an injection cycle, moreover, the jack 23 actuation to reclose the delivery valve can be delayed until after the return stroke of the jack 17 has begun, in order to suck back a small amount of the components from the nozzle dispensing mouth towards the cavity 9C so that the components do not drip between one injection and the next.

In another embodiment of the invention, the containers may be positioned above with their mouths 7A at the bottom, in which case the components can be fed to the feed valve 11 of the positive-displacement pump (9C, 15) by means of gravity, without the aid of compressed air.

As an alternative to the use of compressed air or of gravity, it is possible to use cylinder-piston systems to drive the adhesive components from the containers 7 towards the pumps.

Where, as illustrated in Fig. 4, the contents of a container 7X are dispensed downwards, it is possible to fit a short tube 31 projecting upwards inside the housing 33 in which the mouth of the container 7X (a cartridge or the like) is to be engaged. By this means one avoids or at least reduces the problem of air bubbles getting into the outflow channel 35 for the component fed in by the container 7X.

It will be understood that the drawing shows only an example by way of a practical demonstration of the invention, it being possible to vary the invention as regards shapes and arrangements without thereby departing from the scope of the concept underlying said invention. The presence of any reference numerals in the appended claims is for the purpose of facilitating the reading of the claims with reference to the description and drawing, and does not limit the scope of protection represented by the claims.

## Claims

1. Apparatus for feeding the components of a so-called two-component adhesive, that have to be mixed at the moment of injection by means of an injection nozzle into the devices used to assemble the components of a door or window frame made up of metal sections by means of right-angled corner pieces for the mitre joints, characterized in that it comprises in combination: housings for comparatively large containers (7) in which the components of the adhesive are packaged to allow small quantities thereof to be dispensed; a positive-displacement pump (9C, 15) connected to each housing to feed the respective component to the injector, each pump being provided with a feed valve (11) and a delivery valve (13); and means for opening one of the two valves and closing the other, the opening and closing being synchronized with the phases of each cycle of the associated pump.

2. Apparatus according to Claim 1, characterized in that the pumps are of plunger type (15).

3. Apparatus according to Claim 1 or 2, characterized in that the valves (11, 13) are rotary valves operated by a single actuator (23) via a linkage (11A, 12, 13A).

4. Apparatus according to the previous claims, characterized in that it comprises means for delaying the switching of the valves (11, 13) at the end of the last cycle in a series of injection cycles, in order to bring about a limited withdrawal of the adhesive into the injector.

5. Apparatus according to one of the previous claims, characterized in that each container housing has a compressed-air or cylinder-piston pusher (7B) that maintains pressure on the component to be fed to the corresponding pump.

6. Apparatus according to any one of Claims 1 to 4, characterized in that each container housing is situated at a higher level than its respective pump and feeds the pump by dispensing downwards under gravity.

7. Apparatus according to any one of the previous claims, characterized in that it comprises a system for regulating the unit capacity of the pump, which system may be manual or computerized with an encoder.

8. Apparatus according to Claim 5, characterized in that it comprises a short tube (31) projecting into the housing (33) for the mouth of the container (7X), in order at least to limit the problem of air bubbles getting into the component dispensed by the downward-oriented container.

9. Apparatus for feeding the components of a so-called two-component adhesive that have to be mixed at the moment of injection; all as described above and as illustrated by way of example in the accompanying drawing.
